# EUROPÄISCHE PATENTSCHRIFT

(11) **EP 1 780 518 B1**
(45) Veröffentlichungstag und Bekanntmachung des Hinweises auf die Patenterteilung: **22.02.2017**
(21) Anmeldenummer: 06021478.0
(22) Anmeldetag: 13.10.2006
(51) Int. Cl.: G01F 1/66, B62J 11/00

(54) **Befestigungsvorrichtung zum Befestigen eines Clamp-on-Durchflußmeßgeräts**
Fastening device for fastening a clamp-on flow measuring apparatus
Dispositif de fixation d'un débitmètre à pince

(30) Priorität: 25.10.2005 DE 102005051336
(43) Veröffentlichungstag der Anmeldung: 02.05.2007
(73) Patentinhaber: Krohne AG, 4019 Basel (CH)
(72) Erfinder: Molennar, Marcerl Meijlom, 3311 ZG Dordrecht (NL); Pors, Jan Teunis Aart, 3262 EK Oud-Beijerland (NL); van den Berg, Jeroen, 3342 AE-Hendrik Ido Ambacht (NL); Hogendoorn, Cornelis Johannes, 4261 CK Wijk en Aalburg (NL)
(74) Vertreter: Gesthuysen Patent- und Rechtsanwälte

(56) Entgegenhaltungen:
- DE-A1- 4 000 430
- DE-A1- 4 304 239
- US-A- 5 131 278

## Beschreibung

Die Erfindung betrifft ein Verfahren zum Befestigen eines Clamp-on-Durchflußmeßgeräts an einem von einem Fluid durchströmbaren Meßrohr sowie eine Befestigungsvorrichtung zum Befestigen eines Clamp-on-Durchflußmeßgeräts.

Eine herkömmliche Befestigungsvorrichtung besteht z. B. aus einem Kabelbinder, der dazu genutzt werden kann, als Zusatzeinrichtung eine Clamp-on-Einrichtung an einem von einem Fluid durchströmbaren Rohr als Träger zu befestigen. Bei von einem Fluid durchströmten Rohren ist es häufig gewünscht, den Durchfluß des Fluids zu bestimmen, so daß als Clamp-on-Einrichtungen insbesondere Clamp-on-Durchflußmeßgeräte, wie Clamp-on-Ultraschalldurchflußmeßgeräte, in Betracht kommen. Im übrigen kommen als Rasterung des Befestigungsbandes verschiedene Möglichkeiten in Betracht, wie das Vorsehen eines Sägezahnprofils oder eine Perforierung des Befestigungsbandes in typischerweise äquidistanten Abständen mit Ausnehmungen, in die das Rastelement der Rasteinrichtung eingreifen kann.

Wesentlich bei Clamp-on-Durchflußmeßgeräten ist, daß diese einfach auf bestehende Rohrleitungen aufgesetzt werden können. Es ist also nicht erforderlich, bei bestehenden Rohrleitungen ein Stück aus einem Rohr herauszutrennen, um ein separates Durchflußmeßgerät einsetzen zu können. Dies macht Clamp-on-DurchfluBmeßgeräte universell und einfach einsetzbar.

Zum Beispiel, US5131278 offenbart eine Befestigungsvorrichtung für ein Clamp-on-Durchflussmessgerät, mit einem Befestigungsband, einer Halteeinrichtung und einer Rasteinrichtung, wobei die Halteeinrichtung mit einer durchgehenden Öffnung auf das Befestigungsband aufgefädelt wird und die Rasteinrichtung unabhängig von der Halteeinrichtung wirkt. Die Rasteinrichtung ist in Form eines Hakens ausgebildet.

In einem anderen Beispiel für Befestigen ein Gerät an einem Rohr beschreibt DE4304239 eine Rasteinrichtung, in dessen Ausnehmungen ein Befestigungsband mit beiden Enden ein- bzw. hindurchgeführt wird. Dabei wird die Fixierung des Bandes in der Rateinrichtung durch Spannschrauben vorgenommen.

Bei der Befestigung eines derartigen Clamp-on-Durchflußmeßgeräts auf einem Rohr mittels Kabelbindern besteht ein wesentliches Problem darin, daß das Ausrichten und Befestigen des Geräts aufwendig und schwierig ist. Soll diese Aufgabe von einer Bedienperson alleine bewerkstelligt werden, so fehlt häufig die "dritte Hand", d. h. das Meßgerät kann nur unter Schwierigkeiten oder unter Hilfe einer weiteren Bedienperson korrekt ausgerichtet und fixiert werden. Neben einer nur unbefriedigenden Ausrichtung ist es bei der Verwendung von Kabelbindern zum Befestigen einer Clamp-on-Einrichtung darüber hinaus problematisch, daß die für das jeweilige Gerät erforderliche Haltekraft nicht immer und in allen Situationen gewährleistet werden kann und ein Lösen der Clamp-on-Einrichtung nur unter Zerstörung der Kabelbinder möglich ist.

Vor dem Hintergrund der zuvor geschilderten Problematik ist es die Aufgabe der Erfindung, ein derartiges Verfahren zum Befestigen eines Clamp-on-Durchflußmeßgeräts an einem von einem Fluid durchströmbaren Meßrohr sowie eine entsprechende Befestigungsvorrichtung anzugeben, die von einer einzigen Bedienperson auf einfache Weise alleine benutzt werden können, um ein Clamp-on-Durchflußmeßgerät korrekt ausgerichtet und verläßlich auf einem Meßrohr zu befestigen.

Diese Aufgabe ist gelöst durch ein Verfahren zum Befestigen eines Clamp-on-Durchflußmeßgeräts an einem von einem Fluid durchströmbaren Meßrohr mittels einer Befestigungsvorrichtung gemäß Anspruch 1, wobei die Befestigungsvorrichtung ein mit einer Rasterung versehenes Befestigungsband mit einem freien Ende und einem Ende aufweist, an dem eine Rasteinrichtung befestigt ist, das Befestigungsband und die Rasteinrichtung derart ausgestaltet sind, daß das Befestigungsband an dem Meßrohr befestigbar ist, indem das Befestigungsband in die Rasteinrichtung hinein und durch diese hindurchgeführt wird und das um das Meßrohr herum geführte Befestigungsband zugezogen wird, ein in der Rasteinrichtung vorgesehenes Rastelement mit der Rasterung des Befestigungsbandes zusammenwirkt und dabei gewährleistet, daß sich das Befestigungsband dabei nicht wieder lösen kann, eine an dem Befestigungsband befestigte Halteeinrichtung vorgesehen ist, an der das Clamp-on-Durchflußmeßgerät befestigbar ist, zuerst die Befestigungsvorrichtung an dem Meßrohr befestigt wird, danach das Clamp-on-Durchflußmeßgerät an der Halteeinrichtung befestigt wird, ohne das Befestigungsband vollständig zu spannen, so daß das Clamp-on-Durchflußmeßgerät zwar an dem Meßrohr gehalten wird, jedoch noch nicht vollständig an diesem fixiert wird, danach das Clamp-on-Durchflußmeßgerät ausgerichtet wird und danach das Clamp-on-Durchflußmeßgerät an der Halteeinrichtung vollständig befestigt wird, indem das Befestigungsband durch Abheben der Rasteinrichtung von dem Meßrohr vollständig gespannt wird, so daß das Clamp-on-Durchflußmeßgerät an dem Meßrohr gehalten und fixiert wird.

Weiterhin ist diese Aufgabe gegenständlich gelöst durch eine Befestigungsvorrichtung gemäß Anspruch 1 zum Befestigen eines Clamp-on-Durchflußmeßgeräts an einem von einem Fluid durchströmbaren Meßrohr, wobei die Befestigungsvorrichtung ein mit einer Rasterung versehenes Befestigungsband mit einem freien Ende und einem Ende aufweist, an dem eine Rasteinrichtung befestigt ist, das Befestigungsband und die Rasteinrichtung derart ausgestaltet sind, daß das Befestigungsband an dem Meßrohr befestigbar ist, indem das Befestigungsband in die Rasteinrichtung hinein und durch diese hindurchgeführt wird und das um das Meßrohr herum geführte Befestigungsband auf dem Meßrohr zugezogen wird, ein in der Rasteinrichtung vorgesehenes Rastelement mit der Rasterung des Befestigungsbandes zusammenwirkt und dabei gewährleistet, daß sich das Befestigungsband dabei nicht wieder lösen kann, eine an dem Befestigungsband befestigte Gewindestange vorgesehen ist, an der das Clamp-on-Durchflußmeßgerät befestigbar ist, das Clamp-on-Durchflußmeßgerät mittels einer auf die Gewindestange aufschraubbaren Schraubeinrichtung auf dem Meßrohr befestigbar ist und das Befestigungsband vollständig gespannt werden kann, indem die Schraubeinrichtung auf die Gewindestange aufgeschraubt wird und dabei auf das Clamp-on-Durchflußmeßgerät einwirkt, für das seinerseits als Widerlager das Meßrohr vorgesehen ist, so daß die Rasteinrichtung vom Meßrohr abgehoben wird, wodurch das Clamp-on-Durchflußmeßgerät an dem Meßrohr gehalten und fixiert wird.

Erfindungsgemäß ist also vorgesehen, daß das Befestigungsband der Halteeinrichtung das auf dem Meßrohr zu befestigende Gerät nicht direkt an diesem befestigt, sondern mittels einer an dem Befestigungsband befestigten Halteeinrichtung. Erfindungsgemäß werden damit die Befestigung des Befestigungsbandes an dem Meßrohr einerseits und die Befestigung des Geräts an der Befestigungsvorrichtung andererseits voneinander getrennt.

Dies hat den Vorteil, daß diese beiden Befestigungen unabhängig voneinander gehandhabt und fixiert werden können, was es ermöglicht, das Gerät auf dem Meßrohr schon zu befestigen, ohne es gleich auch zu fixieren. Das heißt, daß das Gerät auf dem Meßrohr in einem ersten Schritt "lose" befestigt werden kann, so daß es sich nicht wieder lösen kann, aber auf dem Meßrohr bewegbar bleibt, um das Gerät dann in einem zweiten Schritt auszurichten und schließlich zu fixieren, so daß auch seine Ausrichtung auf dem Meßrohr festgelegt ist und das Gerät nicht mehr ohne weiteres bewegt werden kann.

Erfindungsgemäß ist vorgesehen, daß die Halteeinrichtung derart ausgebildet ist, daß das Befestigungsband beim Befestigen des Geräts an der Halteeinrichtung gespannt wird. Das bedeutet, daß das um das Meßrohr herumgeführte und auf dem Meßrohr zugezogene Befestigungsband beim Befestigen des Geräts an der Halteeinrichtung eine zusätzliche Kraft erfährt, nämlich eine Spannkraft, so daß schließlich eine Fixierung von Befestigungsvorrichtung und Gerät gemeinsam auf dem Meßrohr erzielt wird.

Als Halteeinrichtungen sind unterschiedliche Arten von Halterungen verwendbar. Gemäß der Erfindung ist jedoch vorgesehen, daß als Halteeinrichtung eine Stange, vorzugsweise eine Gewindestange, verwendet wird. Beim Vorsehen einer Gewindestange als Halteeinrichtung ist es ferner vorgesehen, daß das Gerät mittels einer auf die Gewindestange aufgeschraubten Schraubeinrichtung auf dem Meßrohr befestigbar ist Diesbezüglich haben sich hand- oder werkzeugbetätigbare Muttern bewährt, die eine hinreichend große Auflagefläche aufweisen, mit der sie auf das Gerät zu dessen Befestigung einwirken.

Das Spannen des Befestigungsbandes kann mit unterschiedlichen Einrichtungen erzielt werden. Erfindungsgemäß ist jedoch vorgesehen, daß zum Spannen des Befestigungsbandes die Schraubeinrichtung auf das Gerät einwirkt, für das ihrerseits als Widerlager das Meßrohr vorgesehen ist, Das bedeutet, daß beim Befestigen, nämlich dem Aufschrauben, das Gerät auf das Meßrohr im Zuge des Festschraubens der Schraubeinrichtung das Befestigungsband im wesentlichen radial nach außen vom Meßrohr abgehoben wird, so daß es zusätzlich gespannt wird. Bei hinreichender Spannung wird schließlich eine feste Fixierung des Geräts auf dem Meßrohr erzielt.

Im einzelnen gibt es nun eine Vielzahl von Möglichkeiten, die erfindungsgemäße Befestigungsvorrichtung sowie das erfindungsgemäße Verfahren auszugestalten und weiterzubilden. Dazu wird auf die nachfolgende detaillierte Beschreibung eines bevorzugten Ausführungsbeispiels der Erfindung unter Bezugnahme auf die Zeichnung verwiesen, In der Zeichnung zeigt
- Fig. 1: eine Befestigungsvorrichtung gemäß einem bevorzugten Ausführungsbeispiel der Erfindung zur Verwendung für ein Clamp-on-Durchflußmeßgerät,
- Fig. 2: das Befestigungsband der Befestigungsvorrichtung gemäß dem bevorzugten Ausführungsbeispiel der Erfindung im Detail,
- Fig. 3: die Rasteinrichtung der Befestigungsvorrichtung gemäß dem bevorzugten Ausfuhrungsbeispiel der Erfindung in perspektivischer Ansicht, teilweise im Schnitt,
- Fig. 4: die Rasteinrichtung gemäß dem bevorzugten Ausführungsbeispiel der Erfindung im Schnitt und
- Fig. 5: schematisch das Befestigungsprinzip der Befestigungsvorrichtung gemäß dem bevorzugten Ausführungsbeispiel der Erfindung.

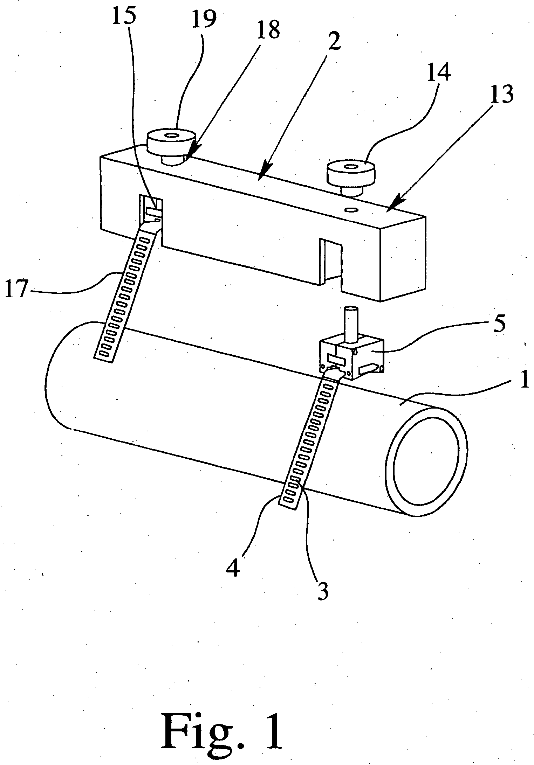

Aus Fig. 1 ist eine Befestigungsvorrichtung gemäß einem bevorzugten Ausführungsbeispiel der Erfindung ersichtlich, die zur Befestigung eines UltraschallDurchflußmeßgeräts des Clamp-on-Typs auf einem Meßrohr 1 dient. Das Meßrohr 1 ist damit der Träger, auf dem das Clamp-on-Durchflußmeßgerät als Zusatzeinrichtung befestigt werden soll. Von dem Clamp-on-Ultraschalldurchflußmeßgerät ist vorliegend nur das Gehäuse 2 gezeigt, das als Ausnahme und Längsführung für zwei Ultraschall-Transducer dient, die vorliegend nicht weiter dargestellt sind.

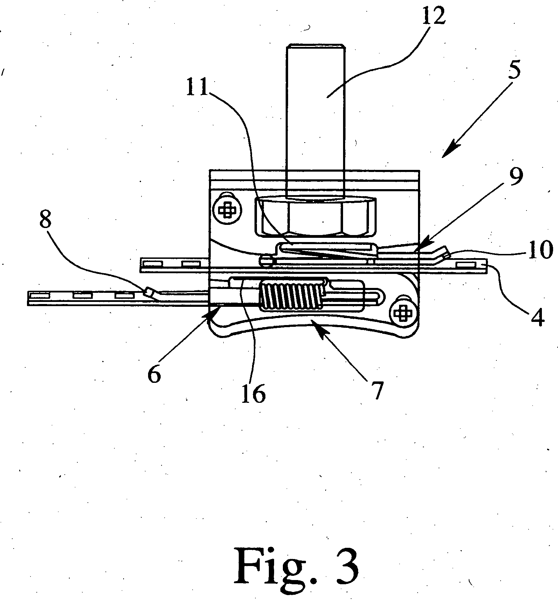

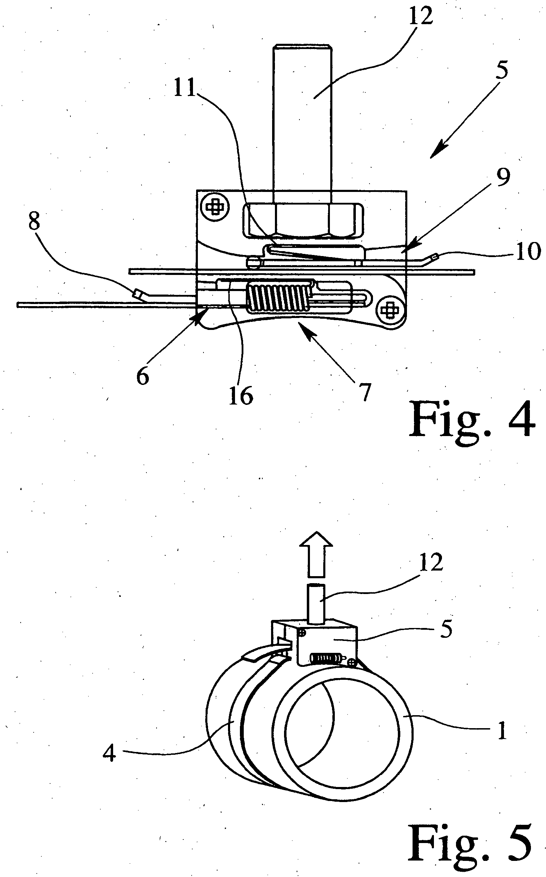

Die Befestigung des Gehäuses 2 des Clamp-on-Ultraschalldurchflußmeßgeräts auf dem Meßrohr 1 erfolgt nun in folgenden Schritten:
Zuerst wird ein mit einer Rasterung 3 versehenes Befestigungsband 4 an dem Meßrohr 1 befestigt, indem eine Rasteinrichtung 5 vorgesehen wird, in die ein Ende des Befestigungsbandes 4 von einer Seite her eingeführt wird, wie z. B. den Fig. 3 und 4 entnehmbar. Diese Figuren zeigen bei der Rasteinrichtung 5 eine untere, von der linken Seite der Rasteinrichtung 5 her zugängliche Ausnehmung 6, in die das eine Ende des Befestigungsbandes 4 eingeführt wird und dort dann mittels eines Rastmechanismusses verrastet. Dieser Rastmechanismus weist unter anderem einen Federmechanismus 7 und einen Hebel 8 auf, auf den von oben her eine im wesentlichen V-förmige Blattfeder 16 wirkt.

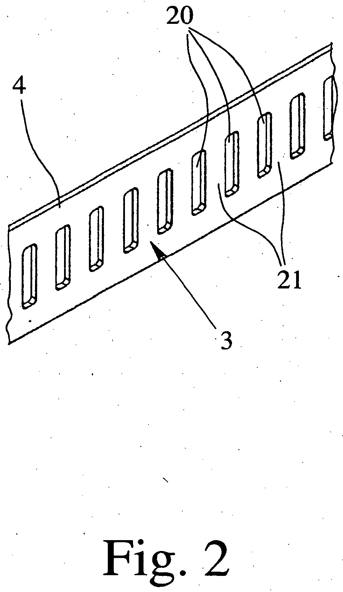

Der Federmechanismus 7 ermöglicht eine gewisse Bewegung des Befestigungsbandes 4 in der Rasteinrichtung 5, was unter anderem ausgleicht; daß in dem Befestigungsband 4 eine Rasterung 3 mit endlichen Abständen vorgesehen ist, wie z. B. Fig. 2 entnehmbar. Dort ist auch gezeigt, daß das Befestigungsband 4 in äquidistanten Abständen Schlitze 20 aufweist, deren Breite geringer als die Abstände 21 der Schlitze zueinander sind. Auf diese Weise wird eine hohe Stabilität des Befestigungsbandes 4 erzielt.

Das andere Ende des Befestigungsbandes 4 wird nun um das Meßrohr 1 herum und dann von der anderen Seite her in die Rasteinrichtung 5 hineingeführt. Dazu weist die Rasteinrichtung 5 oberhalb der Ausnehmung 6, in der das andere Ende des Befestigungsbandes 4 eingeführt ist, eine durchgängige Ausnehmung 9 auf, in der ebenfalls ein Rastmechanismus wirkt, nämlich ein.weiterer Hebel 10 vorgesehen ist, an dem sich ein nicht weiter dargestelltes Rastelement befindet, das mit der Rasterung 3 des Befestigungsbandes derart zusammenwirkt, daß sich das in die Ausnehmung 9 eingeführte Befestigungsband 4 beim Festziehen nicht wieder lösen kann. Dazu drückt eine im wesentlichen V-förmige Blattfeder 11 von oben auf den Hebel 10 und damit auf das Rastelement, das damit in einen der Schlitze 20 des Befestigungsbandes 4 eingreift und dort aufgrund der Federkraft der Blattfeder 11 gehalten wird.

Auf diese Weise wird die Rasteinrichtung 5 mittels des Befestigungsbandes 4 auf dem Meßrohr 1 befestigt, und zwar zuerst nur "lose", also derart, daß die Rasteinrichtung 5 vom Meßrohr 1 zwar nicht wieder abfallen kann, jedoch auf diesem sowohl in Längsrichtung als auch umfangsmäßig beweglich bleibt.

Als Halteeinrichtung für das Gehäuse 2 des zu befestigenden Clamp-on-Ultraschalldurchflußmeßgeräts ist an der Rasteinrichtung 5 eine Gewindestange 12 vorgesehen. Bei mittels des Befestigungsbandes 4 auf dem Meßrohr 1 befestigter Rasteinrichtung 5 steht diese Gewindestange 12 radial nach außen weg. Mittels dieser Gewindestange 12 kann nun das Gehäuse 2 des Clamp-on-Ultraschalldurchflußmeßgeräts auf dem Meßrohr 1 befestigt werden, und zwar wie folgt:
Das Gehäuse 2 weist eine Bohrung 13 auf, mittels derer es auf die Gewindestange 12 aufgesetzt werden kann und damit in Längsrichtung auf der Außenseite des Meßrohrs 1 aufliegt. Um das Gehäuse 2 nun auf dem Meßrohr 1 zu befestigen, ist eine Rändelmutter 14 vorgesehen, die auf die Gewindestange 12 aufgeschraubt werden kann und dabei auf die Oberseite des Gehäuses 2 drückt. Diese Rändelmutter 14 kann nun zuerst nur so weit festgezogen werden, daß die Rasteinrichtung 5 mit dem Befestigungsband 4 zusammen mit dem daran befestigten Gehäuse 2 auf dem Meßrohr 1 beweglich bleibt, nämlich sowohl umfangsmäßig als auch in Längsrichtung verschoben werden kann. Auf diese Weise kann eine korrekte Ausrichtung des Gehäuses 2 auf dem Meßrohr 1 erfolgen, ohne daß die Gefahr besteht, daß das Gehäuse 2 dabei von dem Meßrohr 1 wieder abfällt.

Das Gehäuse 2, das an dem Meßrohr 1 befestigt wird, weist nun, wie Fig. 1 entnehmbar, bereits eine zweite Rasteinrichtung 15 mit einer nicht weiter sichtbaren Gewindestange als Halteeinrichtung und einem Befestigungsband 17 zum Befestigen am Meßrohr 1 auf. Dabei ist die Gewindestange durch eine zweite Bohrung 18 in der Oberseite des Gehäuses 2 hindurchgeführt und dort mittels einer zweiten Rändelmutter 19 gehalten.

Nachdem nun das zweite Befestigungsband 17 ebenfalls um das Meßrohr 1 herum und in die zweite Rasteinrichtung 15 hineingeführt worden ist, wird das Gehäuse 2 endgültig ausgerichtet und dann fixiert, so daß es nicht mehr ohne weiteres bewegt werden kann. Diese Fixierung erfolgt, indem die Rändelmuttern 14, 19 festgezogen werden, wobei zuvor die Befestigungsbänder 4, 17 so weit durch die Rasteinrichtungen 5, 15 hindurchgeführt worden sind, wie möglich.

Wie Fig. 5 schematisch entnehrnbar, in der der Übersichtlichkeit halber die Rändelmutter und das Gehäuse weggelassen sind, wird durch das Festziehen der Rändelmutter die Rasteinrichtung 5 angehoben, so daß insgesamt eine Spannkraft ausgeübt wird, die zum Spannen des Befestigungsbandes 4 führt, was schließlich einen festen Sitz des Gehäuses 2 auf dem Meßrohr 1 gewährleistet.

Neben der einfachen Installierbarkeit des Clamp-on-Ultraschalldurchflußmeßgerät wird gemäß dem vorliegend beschriebenen bevorzugten Ausführungsbeispiel der Erfindung auch eine einfache Lösbarkeit gewährleistet: Durch Anheben des Hebels 10 der Rasteinrichtung 5 bzw. eines entsprechenden, nicht weiter dargestellten Hebels bei der zweiten Rasteinrichtung 15 kann das Befestigungsband 4, 17 aus der Rasteinrichtung 5, 15 wieder herausgezogen werden. Genauso kann das jeweilige Befestigungsband 4, 17 aus der jeweiligen Rasteinrichtung 5, 15 gelöst werden, indem bei der Rasteinrichtung 5 der Hebel 8 bzw. ein entsprechender, nicht dargestellter Hebel bei der zweiten Rasteinrichtung 15 angehoben wird. Damit kann das Clamp-on-Ultraschalldurchflußmeßgerät, z. B. zu Wartungszwecken, vom Meßrohr 1 entfernt werden, ohne die Befestigungsvorrichtung zu zerstören.

## Patentansprüche

1. Befestigungsvorrichtung zum Befestigen eines Clamp-on-Durchflußmeßgeräts an einem von einem Fluid durchströmbaren Meßrohr (1),
wobei die Befestigungsvorrichtung zwei jeweils mit einer Rasterung (3) versehene Befestigungsbänder (4, 17) mit einem freien Ende und einem Ende aufweist, an dem eine Rasteinrichtung (5, 15) befestigt ist,
wobei jeweils das Befestigungsband (4, 17) und die Rasteinrichtung (5, 15) derart ausgestaltet sind,
daß das Befestigungsband (4, 17) an dem Meßrohr (1) befestigbar ist,
indem das Befestigungsband (4, 17) in die Rasteinrichtung (5, 15) hinein und durch diese hindurchgeführt wird und das um das Meßrohr (1) herum geführte Befestigungsband (4, 17) auf dem Meßrohr (1) zugezogen wird, ein in der Rasteinrichtung (5, 15) vorgesehenes Rastelement mit der Rasterung (3) des Befestigungsbandes (4, 17) zusammenwirkt und dabei gewährleistet, daß sich das Befestigungsband (4, 17) dabei nicht wieder lösen kann, eine an der Rasteinrichtung (5, 15) befestigte Gewindestange (12) vorgesehen ist, an der das Clamp-on-Durchflußmeßgerät befestigbar ist, das Clamp-on-Durchflußmeßgerät mittels einer auf die Gewindestange (12) aufschraubbaren Schraubeinrichtung auf dem Meßrohr (1) befestigbar ist und das Befestigungsband (4, 17) vollständig gespannt werden kann, indem die Schraubeinrichtung auf die Gewindestange (12) aufgeschraubt wird und dabei auf das Clamp-on-Durchflußmeßgerät einwirkt, für das seinerseits als Widerlager das Meßrohr (1) vorgesehen ist, so daß die Rasteinrichtung (5, 15) vom Meßrohr (1) abgehoben wird, wodurch das Clamp-on-Durchflußmeßgerät an dem Meßrohr (1) gehalten und fixiert wird,
wobei durch Anheben eines Hebels (8, 10) der jeweiligen Rasteinrichtung (5, 15) das jeweilige Befestigungsband (4, 17) aus der Rasteinrichtung (5, 15) wieder herausgezogen werden kann.

2. Rasteinrichtung (5) der Befestigungsvorrichtung nach Anspruch 1 mit einem eine Rasterung (3) aufweisenden Befestigungsband (4) zum Befestigen eines Clamp-on-Durchflußmeßgeräts an einem von einem Fluid durchströmbaren Meßröhr (1),
wobei die Rasteinrichtung (5) eine untere nur von der linken Seite her zugängliche Ausnehmung (6) aufweist, in die ein Ende des Befestigungsbandes (4) einführbar ist und dort dann mittels eines Rastmechanismusses verrastbar ist, und wobei die Rasteinrichtung (5) oberhalb der Ausnehmung (6) eine durchgängige Ausnehmung (9) aufweist, in der ebenfalls ein Rastmechanismus wirkt und in die ein anderes Ende des Befestigungsbandes (4) von der anderen Seite her hineinführbar ist,
**dadurch gekennzeichnet,**
**daß** der Rastmechanismus der unteren Ausnehmung (6) einen Hebel (8) aufweist, dass der Rastmechanismus der durchgängigen Ausnehmung (9) einen weiteren Hebel (10) aufweist und
**daß** durch Anheben eines Hebels (8, 10) der Rasteinrichtung (5) die Verrastung des Befestigungsbands (4) durch den jeweiligen Rastmechanismus aufhebbar ist.

3. Rasteinrichtung (5) nach Anspruch 2, **dadurch gekennzeichnet, daß** an der Rasteinrichtung (5) eine Gewindestange (12) vorgesehen ist.

4. Rasteinrichtung (3) nach Anspruch 2 oder 3, **dadurch gekennzeichnet, daß** der Rastmechanismus der unteren Ausnehmung (6) durch einen Federmechanismus (7), den Hebel (8) und eine auf den Hebel (8) wirkende Blattfeder (16) realisiert ist.

5. Rasteinrichtung (3) nach einem der Ansprüche 2 bis 4, **dadurch gekennzeichnet, daß** der Rastmechanismus der durchgängigen Ausnehmung (9) durch den weiteren Hebel (10) mit einem Rastelement und eine auf den Hebel (10) drückende Blattfeder (11) realisiert ist.

## Claims

1. Mounting device for mounting a clamp-on flowmeter on a measuring tube (1) through which fluid can flow,
wherein the mounting device has two holding straps (4, 17) provided with catches (3) on a free end and on a second end, on which a catch means (5, 15) is attached,
wherein the holding strap (4, 17) and the catch means (5, 15) are each such designed
that the holding strap (4, 17) can be attached to the measuring tube (1),
in that the holding strap (4, 17) is guided into and through the catch means (5, 15) and pulled tight after the holding strap (4, 7) has been routed around the measuring tube (1), in that a catch element provided in the catch means (5, 15) interacts with the catch (3) of the holding strap (4, 7) and ensures that the holding strap (4, 7) cannot become unfastened, in that a threaded rod (12) attached to the catch means (5, 15) is provided, onto which the clamp-on flowmeter can be attached, the clamp-on flowmeter being attachable to the measuring tube (1) by means of a screw means that is screwable onto the threaded rod (12) and the holding strap (4, 7) can be completely tensioned in that the the screw means is screwed onto the threaded rod (12) and thereby acts on the clamp-on flowmeter, the measuring tube (1) being provided as an abutment for it, so that the catch means (5, 15) is lifted off the measuring tube (1), whereby the clamp-on flowmeter is held and fixed to the measuring tube,
wherein by raising a lever (8, 10) of the catch means (5, 15), the respective holding strap (4, 17) can be pulled out of the catch means (5, 15) again.

2. Catch means (5) of the mounting device according to claim 1 having a catch (3) with a holding strap (4) for attaching a clamp-on flowmeter to a measuring tube (1) through which fluid can flow,
wherein the catch (3) has a bottom recess (6) that is accessible only from the left side and into which one end of the holding strap (4) can be inserted and can be locked there by means of a catch mechanism, and wherein the catch means (5) has a through recess (9) above the recess (6), in which a catch mechanism also acts and in which another end of the holding strap (4) can be inserted from the other side,
**characterized in**
**that** the catch mechanism of the lower recess (6) has a lever (8), that the catch mechanism of the through recess (9) has a further lever (10) and
**that** by raising a lever (8, 10) of the catch means (5), the locking of the holding strap (4) is revocable by the respective catch mechanism.

3. Catch means (5) according to claim 2, **characterized in that** a threaded rod (12) is provided on the catch means (5).

4. Catch means (5) according to claim 2 or 3, **characterized in that** the catch mechanism of the bottom recess (6) is implemented by a spring mechanism (7), the lever (8) and a leaf spring (16) acting on the lever (8).

5. Catch means (5) according to any one of claims 2 to 4, **characterized in that** the catch mechanism of the through recess (9) is implemented by the further lever (10) with a catch element and a leaf spring (11) acting on the lever (10).

## Revendications

1. Dispositif de fixation pour la fixation d'un débitmètre à pince sur un tube de mesure (1) pouvant être parcouru par un fluide,
dans lequel le dispositif de fixation présente deux bandes de fixation (4, 17) munies respectivement d'un crantage (3) avec une extrémité libre et une extrémité sur laquelle un dispositif d'encliquetage (5, 15) est fixé,
dans lequel la bande de fixation (4, 17) et le dispositif d'encliquetage (5, 15) sont chacun configurés de telle manière que la bande de fixation (4, 17) puisse être fixée sur le tube de mesure (1),
par le fait que la bande de fixation (4, 17) est introduite dans le dispositif d'encliquetage (5, 15) et est conduite à travers celui-ci et que la bande de fixation (4, 17) menée autour du tube de mesure (1) est serrée sur le tube de mesure (1), qu'un élément d'encliquetage prévu dans le dispositif d'encliquetage (5, 15) coopère avec le crantage (3) de la bande de fixation (4, 17) et garantit ainsi que la bande de fixation (4, 17) ne peut en l'occurrence plus se desserrer, qu'il est prévu une broche filetée (12) fixée sur le dispositif d'encliquetage (5, 15), sur laquelle le débitmètre à pince peut être fixé, que le débitmètre à pince peut être fixé sur le tube de mesure (1) au moyen d'un dispositif fileté à visser sur la broche filetée (12) et que la bande de fixation (4, 17) peut être complètement serrée par le fait que le dispositif fileté est vissé sur la broche filetée (12) et agit ainsi sur le débitmètre à pince, pour lequel de son côté le tube de mesure (1) est prévu en tant que contre-appui, de telle manière que le dispositif d'encliquetage (5, 15) soit soulevé du tube de mesure (1), le débitmètre à pince étant ainsi maintenu et fixé sur le tube de mesure (1), dans lequel la bande de fixation respective (4, 17) peut de nouveau être extraite hors du dispositif d'encliquetage (5, 15) en soulevant un levier (8, 10) du dispositif d'encliquetage respectif (5, 15).

2. Dispositif d'encliquetage (5) du dispositif de fixation selon la revendication 1 avec une bande de fixation (4) présentant un crantage (3) pour la fixation d'un débitmètre à pince sur un tube de mesure (1) pouvant être parcouru par un fluide, dans lequel le dispositif d'encliquetage (5) présente un évidement inférieur (6) accessible uniquement par le côté gauche, dans lequel une extrémité de la bande de fixation (4) peut être introduite et ensuite y être encliquetée au moyen d'un mécanisme d'encliquetage, et dans lequel le dispositif d'encliquetage (5) présente au-dessus de l'évidement (6) un évidement continu (9), dans lequel agit également un mécanisme d'encliquetage et dans lequel une autre extrémité de la bande de fixation (4) peut être introduite par l'autre côté,
**caractérisé en ce que** le mécanisme d'encliquetage de l'évidement inférieur (6) présente un levier (8), **en ce que** le mécanisme d'encliquetage de l'évidement continu (9) présente un autre levier (10), et **en ce que** l'encliquetage de la bande de fixation (4) peut être levé par le mécanisme d'encliquetage respectif en soulevant un levier (8, 10) du dispositif d'encliquetage (5).

3. Dispositif d'encliquetage (5) selon la revendication 2, **caractérisé en ce qu'**il est prévu une broche filetée (12) sur le dispositif d'encliquetage (5) .

4. Dispositif d'encliquetage (3) selon la revendication 2 ou 3, **caractérisé en ce que** le mécanisme d'encliquetage de l'évidement inférieur (6) est réalisé par un mécanisme à ressort (7), le levier (8) et un ressort à lame (16) agissant sur le levier (8) .

5. Dispositif d'encliquetage (3) selon l'une quelconque des revendications 2 à 4, **caractérisé en ce que** le dispositif d'encliquetage de l'évidement continu (9) est réalisé par l'autre levier (10) avec un élément d'encliquetage et un ressort à lame (11) poussant sur le levier (10).
